# EUROPEAN PATENT SPECIFICATION

(11) **EP 3 851 088 B1**
(45) Date of publication and mention of the grant of the patent: **16.08.2023**
(21) Application number: 20216736.7
(22) Date of filing: 22.12.2020
(51) Int. Cl.: A61J 1/16, C03C 17/00, B08B 9/24, B08B 9/42, B65B 3/00, B65B 35/36, B65B 35/38, B65B 55/24

(54) **METHOD FOR PROCESSING GLASS CONTAINERS, CAPTURING DEVICE FOR CAPTURING AND HOLDING GLASS CONTAINERS AND APPARATUS FOR PROCESSING GLASS CONTAINERS**
VERFAHREN ZUR VERARBEITUNG VON GLASBEHÄLTERN, AUFFANGVORRICHTUNG ZUM AUFNEHMEN UND HALTEN VON GLASBEHÄLTERN UND EINRICHTUNG ZUR VERARBEITUNG VON GLASBEHÄLTERN
PROCÉDÉ DE TRAITEMENT DE RÉCIPIENTS EN VERRE, DISPOSITIF DE CAPTURE ET DE MAINTIEN DE RÉCIPIENTS EN VERRE ET APPAREIL DE TRAITEMENT DE RÉCIPIENTS EN VERRE

(30) Priority: 16.01.2020 DE 202020100214 U
(43) Date of publication of application: 21.07.2021
(73) Proprietor: SCHOTT Pharma AG & Co. KGaA, 55122 Mainz (DE)
(72) Inventor: WASCHBÜSCH, Michael, 55278 Undenheim (DE); BAUCH, Hartmut, 55278 Mommenheim (DE); FRATZER, Oliver, 63329 Egelsbach (DE); ANTON, Andrea, 55595 Hüffelsheim (DE); SCHMITT, Hans-Joachim, 55437 Ockenheim (DE)
(74) Representative: Blumbach · Zinngrebe Patentanwälte PartG mbB

(56) References cited:
- EP-B1- 2 659 980
- WO-A1-2014/009037
- WO-A1-2018/082925
- WO-A2-2013/164422
- WO-A2-2014/072019
- DE-U1- 29 711 806
- JP-A- 2005 349 288
- US-A1- 2014 034 545
- US-A1- 2015 089 830
- US-A1- 2015 122 693
- US-A1- 2016 130 022

## Description

The invention relates to a method for processing glass containers, in particular vials for pharmaceutical, medical or cosmetic applications, a device for capturing and holding such glass containers, and an apparatus for processing glass containers.

Glass containers which are used as packaging material for pharmaceutical, medical or cosmetic applications are usually subjected to further processing steps after their hot forming before they are finally filled or distributed. Typical processing steps after hot forming are, for example, washing, followed by drying or sterilization to meet the high requirements, such as low particle load or sterility of the glass containers, for pharmaceutical, medical or cosmetic applications.

Document JP 2005 349 288 A, for example, relates to a method for producing a coated glass container, and more specifically, without using a masking tape or the like, after simultaneously forming a painted portion and a non-painted portion, a cured coating film is formed corresponding to the painted portion.

However, a drawback of known methods and devices for washing and drying or other processing of glass containers is that the glass containers usually suffer scratches or at least slightest damage to their surface through direct contact with their environment, such as system components or other glass containers, which might act as initial defects for breakage and can lead to a reduced strength of the glass containers. This problem occurs particularly when large quantities of glass containers are to be washed and dried or otherwise processed simultaneously in order to ensure a cost-efficient production, especially for packaging mass products. A further drawback of known methods is that unwanted substances can enter and contaminate the inside of the glass container during processing, which is undesirable in view of their pharmaceutical, medical or cosmetic use.

Therefore, it is an object of the invention to provide a method, apparatus and/or device for the processing of glass containers, which allows an efficient processing of glass containers and at the same time prevents damage to the glass surface in order to increase the strength of the containers on the one hand and to avoid cosmetic defects on the other hand. Furthermore, it is an aspect of the object of the invention to provide a method, apparatus and/or device for preventing the entry of substances into the interior of the glass container during the processing steps.

To solve this object, the invention discloses a method for cleaning and coating of glass containers which are designed as vials for pharmaceutical, medical or cosmetic applications, comprising: a hollow body surrounding an inner volume, having a lower end closed by a container bottom, a cylindrical container body, an upper end with a container shoulder, a container neck, a container collar and a container opening which extends into the inner volume of the glass container, and an inner container surface facing the inner volume and an outer container surface facing away from the inner volume.

The method includes that a plurality of glass containers is simultaneously subjected to a first processing step in which the plurality of glass containers is simultaneously cleaned, such that the outside surface of the glass containers is cleaned with a cleaning fluid and thereafter the plurality of glass containers is simultaneously subjected to a second processing step in which the plurality of glass containers is simultaneously coated such that the outer container surface of the glass containers is coated with a coating material, wherein before and during the first and second processing step the outer container surface of the glass container is contact-free with respect to the other glass containers and each glass container of the plurality of glass containers is held individually.

In particular, it may be preferred that before and/or during the first and/or second processing step less than 20 percent of the outer container surface, preferably less than 10 percent of the outer container surface, more preferably less than 5 percent of the outer container surface, and most preferably less than 2 percent of the outer container surface is in contact with a material, in particular a material having a lower hardness than that of the glass container.

The part of the outer container surface that may come into contact with a material is preferably located at the upper end of the glass container, preferably above the container shoulder and for example at the container neck and/or the container collar.

According to an embodiment the contact provided for holding the glass container, is preferably at its upper end, in particular at its container collar and/or its container neck, more preferably such that the glass container is secured by the container collar against a downward movement.

Each glass container of the plurality of glass containers is held individually and without contact with respect to the other glass containers.

Preferably the method further comprises that before and/or during the first and/or second processing step, the inner container surface of the glass container is contact-free, in particular by sealingly closing the container opening of the glass containers in order to prevent substances from penetrating into the inner volume, in particular to prevent penetration of liquids and solids into the inner volume, and preferably also to prevent penetration of gases or gaseous compounds into the inner volume.

Furthermore, a third, a fourth and possibly even more processing steps may be included, wherein before and/or during the third, fourth and/or further processing steps, the outer container surface of the glass container is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

According to an embodiment in each processing step the plurality of glass containers is simultaneously processed, preferably in an individual processing station.

According to an embodiment in each processing step the plurality of glass containers is simultaneously held by a capturing device, the capturing device preferably being adapted to simultaneously capture and hold the plurality of glass containers.

As described above, the method comprises that the plurality of glass containers is simultaneously cleaned, such that the outside surface of the glass containers is cleaned with a cleaning fluid and the plurality of glass containers is simultaneously coated such that the outer container surface of the glass containers is coated with a coating material, the coating being performed after the cleaning, i.e., the cleaning being the first processing step, and the coating preferably being the second processing step, and wherein before and during the cleaning and coating the outer container surface of the glass container is contact-free with respect to the other glass containers. The glass containers may be in contact with a material having a lower hardness than that of the glass container or only in contact with such materials and, preferably, the inner container surface of the glass container is contact-free, in particular by sealingly closing the container opening of the glass containers.

The cleaning of the glass containers may comprise ultrasonic cleaning.

The coating of the glass containers may be performed by dipping the glass container into a coating material, wherein the coating material preferably comprises silicone or an emulsion with silicone and water, preferably being a silicone emulsion.

The coating material may, for example, be a silicone emulsion with a silicone content between 0.4 and 7 weight percent of the silicone emulsion or comprise such a silicone emulsion. Preferably, the coating material, in particular, the emulsion also includes solvents, more preferably propylene glycol. The coating material, in particular the silicone emulsion, may be formed such that it post-cures under the influence of temperature.

Due to the requirements for the pharmaceutical, medical or cosmetic application of coated glass containers, the coating material, in particular, the silicone is preferably recommended by the German Federal Institute for Risk Assessment (BfR) for contact with foodstuffs and more preferably is approved as a medical product by the German Federal Office for Drugs and Medical Devices (BfArM),

The coating material may, for example, comprise a 35% dimethicone emulsion, wherein the coating material may preferably also include water. Specifically, the coating material may comprise the Dow Corning^{®} 365, 35% Dimethicone NF emulsion and/or the Dow Corning^{®} 366 35% Dimethicone NF emulsion.

Preferably, the glass containers are first dipped with the container bottom into the coating material and then further up to an upper limit, in particular at an upper edge of the glass containers, wherein the upper limit is preferably located in the area of the container shoulder, more preferably in the transition area from the container shoulder to the cylindrical container body.

Furthermore, the glass containers are preferably removed again from the coating material, wherein, subsequently, the coating may be homogenized, for example by removing or smoothing a drop of coating material formed at the container bottom. To this end, the plurality of glass containers, in particular their outer container surface, in particular the container bottom, may be dipped into a solvent or advanced to the surface of a solvent or advanced to a smoothing device.

The homogenization, which may occur after coating the glass containers, in particular after removing the glass containers from the coating material, may be a further processing step in which the glass containers are preferably simultaneously processed

According to an embodiment before and/or during the homogenization the outer container surface of the glass container is contact-free or in contact with a material having a lower hardness than that of the glass container or only in contact with such materials. Preferably, the inner container surface of the glass container is contact-free, in particular by sealingly closing the container opening of the glass containers (10).

The method may further comprise drying the coating material, the drying preferably being a further processing step in which the glass containers are preferably simultaneously processed, wherein during the drying the outer container surface of the glass container preferably is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

The drying of the coating material may in particular be performed by waiting and/or adding heat. The drying may also be performed by application of vacuum or microwave radiation.

The plurality of glass containers is simultaneously transported between the processing steps, in particular by means of a transport device as described in this document.

Preferably, the glass containers are transported such that the outer container surface of the glass container is contact-free or in contact with a material having a lower hardness than that of the glass container or only in contact with such materials and, preferably, the inner container surface of the glass container is contact-free, in particular by sealingly closing the container opening of the glass containers in order to prevent substances from penetrating into the inner volume.

Preferably, the transport device is adapted to move the capturing device from one processing station to the next processing station such that the plurality of glass containers held by the capturing device is simultaneously transported from one processing station to the next processing station.

The plurality of glass containers may be held during the processing steps and/or during the transporting such that each glass container is held individually and contact-free with respect to the other glass containers, and, preferably, the container opening of the glass containers is sealingly closed, in particular by means of the capturing device as described in this document.

It may also be provided that the plurality of glass containers is held continuously during the processing steps and, preferably, further held during transport, and wherein preferably the container opening of the glass containers is sealingly closed meanwhile.

To solve the object of the invention, it is further disclosed an apparatus for cleaning and coating glass containers, the apparatus comprising a capturing device, at least two processing stations and a transport device. One of the processing stations is designed as a cleaning station for simultaneously cleaning the plurality of glass containers held by the capturing device and one processing station is designed as a coating station for simultaneously coating the plurality of glass containers held by the capturing device.

The glass containers, which are processed with the apparatus, are configured as vials for pharmaceutical, medical or cosmetic applications, comprising, in particular, a hollow body surrounding an inner volume, having a lower end closed by a container bottom, a cylindrical container body, an upper end with a container shoulder, a container neck, a container collar and a container opening which extends into the inner volume of the glass container, and an inner container surface facing the inner volume and an outer container surface facing away from the inner volume.

The capturing device of the apparatus is adapted to simultaneously capture and hold a plurality of glass containers, wherein the capturing device comprises a plurality of individual holding sockets, each adapted to capture and hold one of the glass containers individually and contact-free with respect to the other glass containers.

The at least two processing stations of the apparatus are each adapted to simultaneously subject the plurality of glass containers held by the capturing device to a specific processing step.

Furthermore, the transport device of the apparatus is adapted to move the capturing device from one processing station to the next processing station such that the plurality of glass containers held by the capturing device is simultaneously transported from one processing station to the next processing station.

Preferably, the individual holding sockets of the capturing device are each designed to hold the glass container at its upper end, in particular at its container collar and/or its container neck, in such a way that the glass container is secured by the container collar against downward movement, for example by the holding sockets clasping the container collar and/or the container neck.

For example, the individual holding sockets of the capturing device can each comprise a first and a second holding body, wherein the two holding bodies are designed to be movable with respect to each other.

Preferably, the individual holding sockets of the capturing device are each designed to hold the glass container at its upper end, in particular at its container collar and/or its container neck, in such a way that the glass container is secured against downward movement by the container collar, for example by the holding sockets clasping the container collar and/or the container neck.

For example, the individual holding sockets of the capturing device may each comprise a first and a second holding body, wherein the two holding bodies are designed to be movable relative to each other.

In particular, the two holding bodies are designed to be movable apart in such a way that a distance between the two holding bodies can be increased so that the two holding bodies of the holding socket can be placed over the container collar of the glass container from above, wherein the distance can preferably be increased to a limited extent so that the two holding bodies of the holding socket cannot be placed over the container bottom of the glass container from below.

In addition, the two holding bodies are, in particular, designed to be movable relative to each other in such a way that the distance between the two holding bodies is reducible again, so that the two holding bodies of the holding socket hold the glass container at its upper end, in particular at its container collar and/or its container neck, for example by clasping it.

In a further embodiment of the invention, the capturing device comprises one or more capturing strips, which each have a first strip arm and a second strip arm, wherein the capturing strips each comprise at least some of the holding sockets, and wherein the first strip arm of a capturing strip forms the first holding bodies of the holding sockets and the second strip arm forms the second holding bodies of the holding sockets.

Preferably the capturing device comprises at least 2 holding sockets, in particular at least 10 holding sockets, preferably at least 25 holding sockets, more preferably at least 50 holding sockets, and particularly preferably at least 100 holding sockets.

The plurality of holding sockets of the capturing device can be arranged in a regular grid, for example a two-dimensional matrix, preferably in such a way that the capturing device comprises a plurality of, in particular equidistantly arranged, capturing strips each with a plurality of, in particular equidistantly arranged, holding sockets.

For example, the capturing device may comprise at least 2 capturing strips each with at least 2 holding sockets, preferably at least 3 capturing strips each with at least 3 holding sockets, more preferably at least 5 capturing strips each with at least 5 holding sockets, and particularly preferably at least 7 capturing strips each with at least 7 holding sockets.

In a preferred embodiment, the capturing device has at least one sealing element which can be brought into sealing contact with the upper end of a glass container held by the capturing device, in particular the container collar, in such a way that the container opening is sealed tightly in order to prevent the entry of substances into the inner volume, in particular during a processing step at one of the processing stations.

The at least one sealing element is preferably designed such that it can be brought simultaneously into sealing contact with the upper ends of several glass containers held by the capturing device in such a way that the container openings of all these glass containers are simultaneously sealed tightly.

Furthermore, the capturing device preferably comprises pressing means adapted to press the upper end of the glass container held by the capturing device and the sealing element against each other in order to bring the upper end of the glass container into sealing contact with the sealing element.

The pressing means is preferably designed such that the upper end of the glass container is pressed against the sealing element, which is preferably fixedly attached to the capturing device, when the capturing device captures the glass container.

The pressing means can, for example, be designed as an edge of the first and/or second holding body being inclined with respect to the longitudinal axis of a glass container held by the capturing device.

The capturing device, in particular its holding sockets, in particular its holding body, advantageously comprise a first contact area which comes into contact with the glass container during the capturing and holding of the glass container.

This first contact area can comprise or consist of a material which has a lower hardness than Shore D 95, preferably a lower hardness than Shore D 90, particularly preferably a lower hardness than Shore D 85. A hardness of at least Shore D 40 can be advantageous. In this respect, reference is made to ISO standard 7619-1. A hardness lower than Brinell 20 may also be used, wherein reference is made to ISO standards 6506-1 to 6506-4.

The first contact area may comprise or consist of a material recommended by the German Federal Institute for Risk Assessment (BfR) for contact with foodstuffs.

Furthermore, the first contact area may comprise or consist of one of the following materials: PU, PVC, rubber, silicone, fluorosilicone, PTFE or a similar material, wherein the material can preferably be a bulk material or a foam.

The sealing element may advantageously have a second contact area, which comes into contact with the glass container when capturing and holding the glass container.

This second contact area may include or consist of a material which is less hard than Shore A 75, preferably less hard than Shore A 65.

Further, the second contact area may include or consist of a material recommended by the German Federal Institute for Risk Assessment (BfR) for contact with foodstuffs.

The second contact area may also include or consist of one of the following materials: PU, PVC, rubber, silicone, fluorosilicone, PTFE or a similar material, wherein the material can preferably be a bulk material or a foam.

The sealing element and the second contact area can at least partially consist of the same material, or preferably consist of the same material.

In the following, some examples of possible processing stations of the apparatus according to the invention are described.

Accordingly, the apparatus comprises in particular a processing station designed as a washing station for simultaneously washing the plurality of glass containers held by the capturing device in such a way that the outer container surface of the glass container is washed with a washing fluid, and in particular in such a way that during this no washing fluid reaches the inner container surface of the glass container, and in particular in such a way that the outer container surface of the glass container only comes into contact with materials which have a lower hardness than that of the glass container. Hardness of the glass container is understood to be the hardness of the glass material of the glass container. The hardness of any materials that may come into contact with the glass container is therefore lower than that of the glass material, wherein to determine the hardness, in particular the Mohs hardness can be used. In other words, it may be provided that the glass material can scratch the materials in contact with it.

Furthermore, the apparatus comprises in particular a processing station designed as a coating station for simultaneously coating the plurality of glass containers held by the capturing device in such a way that the outer container surface of the glass container is coated with a coating material, and in particular in such a way that during this no coating material reaches the inner container surface of the glass container, and in particular in such a way that the outer container surface of the glass container only comes into contact with materials which have a lower hardness than that of the glass container.

Furthermore, the apparatus may include a processing station designed as a homogenization station in order to simultaneously homogenize the coating on the plurality of glass containers held by the capturing device, such as, for example, smoothing and/or removing a drop of coating material formed at the container bottom, in particular in such a way that the outer container surface of the glass container, in particular the container bottom, is immersed in a solvent or is brought to the surface of a solvent, in particular in such a way that in the process no solvent reaches the inner container surface of the glass container, and in particular in such a way that the outer container surface of the glass container comes into contact only with materials which have a lower hardness than that of the glass container.

Alternatively, the processing station designed as a homogenization station can comprise at least one smoothing device, preferably a plurality, corresponding to the plurality of glass containers, of smoothing devices, wherein the smoothing device is designed in particular as a pointed rod and/or preferably consists of a material with a lower hardness than that of the glass container, in order to smooth and/or remove, preferably simultaneously, on the plurality of glass containers held by the capturing device, a drop of coating material formed in each case on the container base, in particular in such a way that the outer container surface of the glass container, in particular the container bottom, is brought up to the smoothing device, and in particular in such a way that the outer container surface of the glass container does not come into contact with the smoothing device.

Furthermore, the homogenization station can also include a suck-off device to homogenize the coating, e.g. to smooth and/or remove a drop of coating material formed at the container bottom. It is also possible that the homogenization station includes a device for moving the glass containers, in particular a device for shaking and/or rotating the glass containers to achieve homogenization.

In addition, the apparatus may include a processing station designed as a drying station for simultaneously drying the plurality of glass containers held by the capturing device, in particular in such a way that the outer container surface of the glass container comes into contact only with materials having a lower hardness than that of the glass container.

The capturing device of the apparatus may be arranged to hold the plurality of glass containers continuously during the processing steps to be carried out at the at least two processing stations and preferably further during the transport from one processing station to the next processing station by the transport device.

In addition, the capturing device of the apparatus may be adapted to close the container opening of a glass container held by the capturing device by means of the sealing element continuously during the processing steps to be carried out at the at least two processing stations and preferably further to close it during the transport from one processing station to the next processing station carried out by the transport device.

In order to ensure processing under clean room conditions, it may further be provided that the apparatus, in particular the processing station designed as a washing station, the processing station designed as a coating station, the processing station designed as a homogenization station and/or the processing station designed as a drying station, comprises an air flow system, in particular for generating a laminar air flow.

By means of the apparatus described above, which comprises in particular a washing station, a coating station and, if applicable, a homogenization station and, if applicable, a drying station, a process as disclosed above in this document can be carried out.

The invention further relates to a capturing device for simultaneously capturing and holding a plurality of glass containers, such as vials for pharmaceutical, medical or cosmetic applications, in particular glass containers comprising a hollow body surrounding an inner volume, having a lower end closed by a container bottom, a cylindrical container body, an upper end with a container shoulder, a container neck, a container collar and a container opening which extends into the inner volume of the glass container, and an inner container surface facing the inner volume and an outer container surface facing away from the inner volume, in particular for an apparatus for processing glass containers as described above.

The capturing device comprises a plurality of individual holding sockets, each adapted to capture and hold one of the glass containers individually and contact-free with respect to the other glass containers.

In addition, the capturing device may include some or all of the features disclosed in connection with the capturing device of the apparatus described above.

In one specific example, the capturing device may be configured such that (a) the individual holding sockets of the capturing device each comprise a first and a second holding body, wherein the two holding bodies are movable relative to each another, and (b) the capturing device comprises one or more capturing strips, each capturing strip comprising a first strip arm and a second strip arm, the first strip arm forming the first holding bodies of the holding sockets and the second strip arm forming the second holding bodies of the holding sockets, and (c) the capturing device comprises at least one sealing element which can be brought into sealing contact with the upper end of a glass container held by the capturing device, in particular the container collar, such that the container opening is sealingly closed, and (d) the capturing device comprises pressing means adapted to press the upper end of the glass container held by the capturing device and the sealing element against each other to bring the upper end of the glass container into sealing contact with the sealing element.

Alternatively, the capturing device may, for example, also be configured as a suction device. In this case, the plurality of individual holding sockets may each be designed as suction ports, which may each be configured to capture and hold one of the glass containers individually and without contact to the other glass containers.

To this end, a suction port may comprise a suction seal and a suction inlet, wherein the suction seal encloses the suction inlet and the suction inlet is configured to generate a negative pressure relative to the environment.

The suction seal may in particular be configured for establishing sealing contact with the upper end of the glass container, in particular the container collar.

The suction inlet may in particular be configured to generate a vacuum through the container opening within the inner volume of the container when the suction seal is in sealing contact with the upper end of the container, in order to capture and hold the glass container by means of the vacuum in its interior.

The capturing device being configured as a suction device as described above may also be employed as a capturing device within the apparatus described above.

In what follows, preferred embodiments of the invention are described with reference to the figures.
- Fig. 1: shows a schematic illustration of an apparatus for processing glass containers with several processing stations,
- Fig. 2: shows a schematic illustration of an apparatus for processing glass containers with several processing stations and an air flow system,
- Fig. 3: shows a schematic illustration of a capturing device with four capturing strips with seven holding sockets each,
- Fig. 4: shows (a), (b) schematic illustrations of a capturing strip with a holding socket holding a glass container, (c) a schematic illustration of a glass container,
- Fig. 5: shows a schematic illustration of a glass container held by a holding socket, the container opening being sealingly closed by a sealing element.

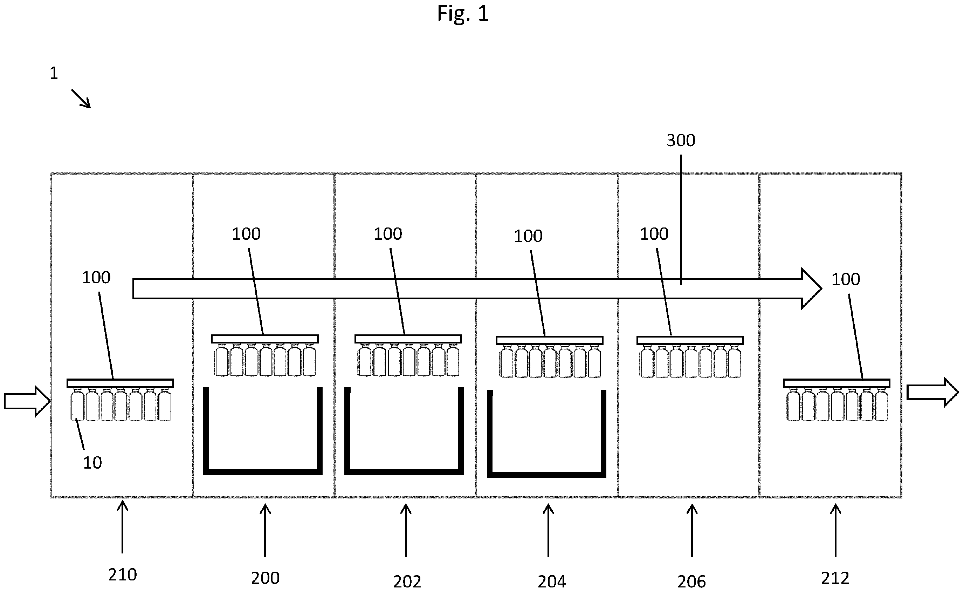

Fig. 1 shows an apparatus 1 allowing a plurality of glass containers 10 after hot forming to be simultaneously subjected to different processing steps in order to prepare the glass containers 10 for pharmaceutical, medical or cosmetic applications.

The apparatus 1 comprises a feeder 210 in which the plurality of glass containers 10 can be inserted manually or automatically. The feeder 210 can also be designed to receive a transport packaging (e.g. ready-to-use packaging), also known as a tub or tray, for a plurality of glass containers 10 arranged regularly and spaced from each other. After the glass containers 10 are inserted into the feeder 210, they are collected for further processing.

For this purpose, the apparatus 1 comprises a capturing device 100, which can, for example, be designed so that it can be moved downwards in order to capture the glass containers 10 inserted into the feeder 210 at their upper ends 15. The capturing device 100 is designed such that the glass containers 10 are captured with mutual spacing so that mutual contact of the glass containers 10 is avoided.

The capturing device 100 can be designed to be movable in an upwards direction as well so that the plurality of glass containers 10 are still held by the capturing device 100 at their upper ends 15 and can be subjected to further processing steps in this state. To carry out these processing steps, apparatus 1 comprises several processing stations, in this example a washing station 200, a coating station 202, a homogenization station 204 and a drying station 206.

In order to transport the plurality of glass containers 10 held by the capturing device 100 to these processing stations 200, 202, 204, 206, the apparatus 1 also comprises a transport device 300, which is designed to move the capturing device 100 with the glass containers 10 first from the feeder 210 to the first processing station, here designed as washing station 200, and then one after another to the further processing stations.

Finally, the apparatus 1 shown here also includes an outlet 212 to discharge the glass containers 10 from the apparatus 1 after their processing. Consequently, the capturing device 100 is also designed to release the glass containers 10, particularly after their processing. The transport device 300 can be designed as a rotary conveyor which moves the capturing device 100 after the last processing station 206 or after the outlet 212 back to the starting position, e.g. the feeder 210.

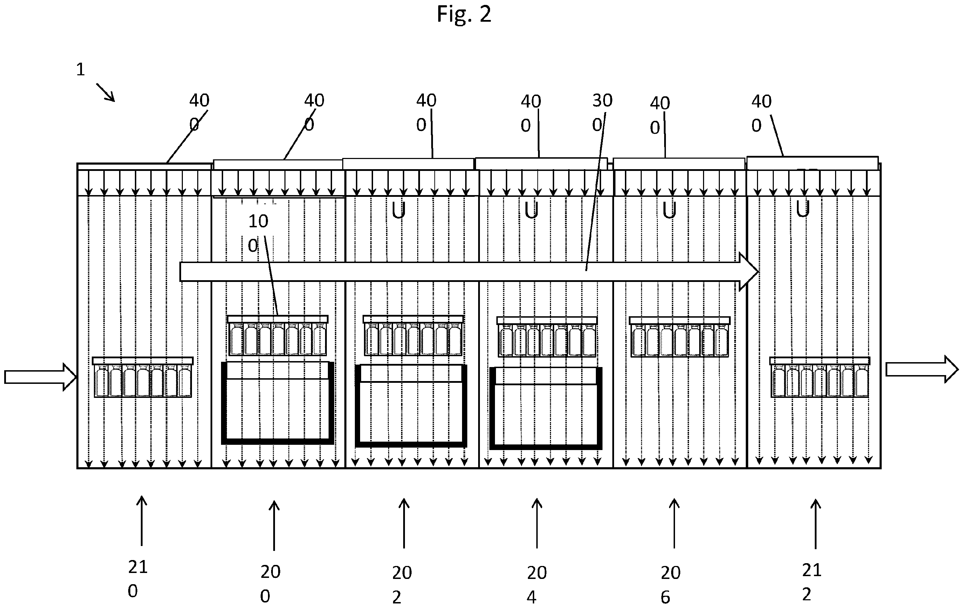

Fig. 2 shows another apparatus 1 for processing a plurality of glass containers 10 The apparatus corresponds to the apparatus 1 shown in Fig. 1, but is additionally equipped with an air flow system 400, which in this example comprises several units for each of the processing stations 200, 202, 204, 206 and preferably the feeder 210 and the outlet 212. With the airflow system 400, air can be blown in from above the apparatus 1 into the apparatus 1 or in the individual processing stations, for example via a filter, and extracted again below the apparatus.

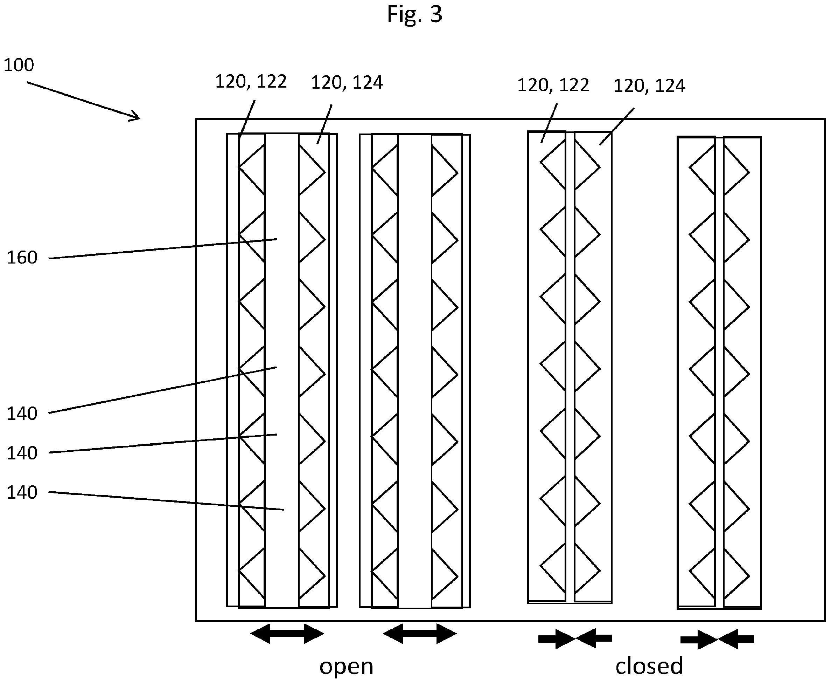

Fig. 3 shows the capturing device 100 in a top view. The capturing device 100 comprises a plurality of individual holding sockets 140, each of which is designed to capture, hold, and finally release one of the glass containers 10 individually and without contact to the other glass containers 10. Furthermore, the capturing device 100 comprises several capturing strips 120 arranged side by side in a first dimension, wherein each of the capturing strips 120 in turn comprises several of the holding sockets 140, which are arranged side by side in a second dimension.

The adjacent capturing strips 120 each comprise two strip arms 122, 124, wherein the two strip arms 122, 124 are designed to be movable with respect to each other such that the two strip arms 122, 124 can be moved away from each other to set the holding sockets 140 in an open state and can be moved towards each other to set the holding sockets 140 in a closed state.

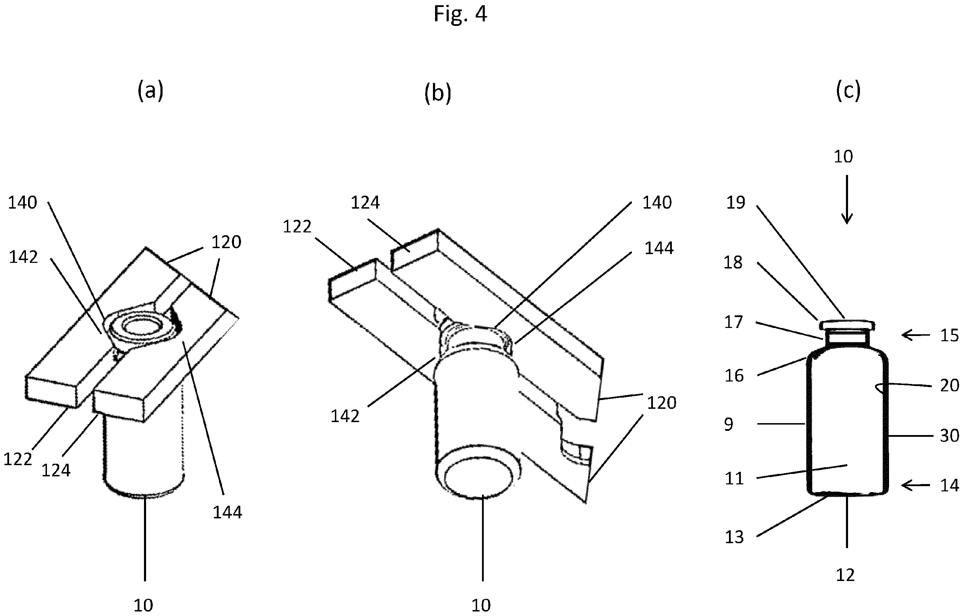

Fig. 4 (a) and (b) show a part of a capturing strip 120 with the two opposed strip arms 122, 124. The two strip arms 122, 124 form a holding socket 140 adapted to the shape of the container neck 17 and/or container collar 18, with a first and second holding body 142, 144. The first holding body 142 can be be formed by an essentially semicircular recess in the first strip arm 122, while the second holding body 144 can be formed by an opposite, again essentially semicircular recess in the second strip arm 124, such that the two semicircular recesses together define an essentially circular holding socket 140 for gripping the container neck 17 and/or the container collar 18.

The two strip arms 122, 124 of the capturing strip 120 can be moved away from each other in order to move the two holding bodies 142, 144 apart and thus open the holding socket 140. When the holding socket 140 is in the open state, the capturing strip 120 with the holding socket 140 designed as a recess can be moved from above over the container collar 18 of the glass container 10. Furthermore, the two strip arms 122, 124 of the capturing strip 120 can be moved towards each other again in order to move the two holding bodies 142, 144 towards each other and thus close the holding socket 140.

Fig. 4 (c) shows an example of a glass container 10 designed as a vial for pharmaceutical, medical or cosmetic applications, which can be processed with the described apparatus 1. The glass container 10 comprises a hollow body 12 surrounding an inner volume 11 with a lower end 14 closed by a container bottom 13, a cylindrical container body 9, an upper end 15 with a container shoulder 16, a container neck 17, a container collar 18 and a container opening 19 which extends into the inner volume 11 of the glass container 10, as well as an inner container surface 20 facing the inner volume 11 and an outer container surface 30 facing away from the inner volume 11.

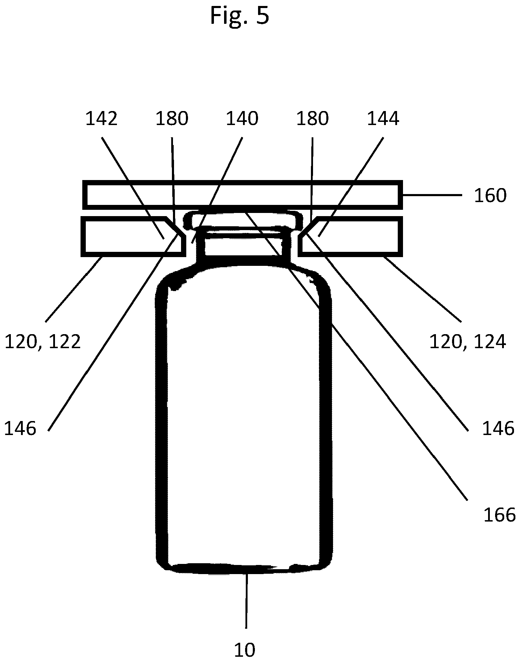

Fig. 5 shows a glass container 10 held by a holding socket 140 in the closed state. The two holding bodies 142, 144 are designed to engage under the container collar 18 such that the glass container is secured against a downward movement. A sealing element 160 is arranged above the capturing strip 120, which seals the upper end 15 of the glass container when the holding socket 140 is closed. For this purpose, the holding bodies 142, 144 comprise a pressing means 180, which is designed as an edge of the holding bodies 142, 144 inclined to the longitudinal axis of the glass container 10 in order to press the glass container 10 upwards against the sealing element.

## Claims

1. Method for cleaning and coating glass containers (10) designed as vials for pharmaceutical, medical or cosmetic applications, the glass containers (10) comprising a hollow body (12) surrounding an inner volume (11), having a lower end (14) closed by a container bottom (13), a cylindrical container body (9), an upper end (15) with a container shoulder (16), a container neck (17), a container collar (18) and a container opening (19) which extends into the inner volume (11) of the glass container (10), and an inner container surface (20) facing the inner volume (11) and an outer container surface (30) facing away from the inner volume (11),
wherein a plurality of glass containers (10) is simultaneously subjected to a first processing step in which the plurality of glass containers (10) is simultaneously cleaned, such that the outside surface (30) of the glass containers (10) is cleaned with a cleaning fluid and thereafter the plurality of glass containers (10) is simultaneously subjected to a second processing step in which the plurality of glass containers (10) is simultaneously coated such that the outer container surface (30) of the glass containers (10) is coated with a coating material, and
wherein before and during the first and second processing step the outer container surface (30) of the glass container (10) is contact-free with respect to the other glass containers (10) and each glass container (10) of the plurality of glass containers (10) is held individually.

2. Method for cleaning and coating glass containers (10) according to the preceding claim, wherein before and/or during the first and/or second processing step less than 20 percent of the outer container surface (30), preferably less than 10 percent of the outer container surface (30), more preferably less than 5 percent of the outer container surface (30), and most preferably less than 2 percent of the outer container surface (30) is in contact with a material, in particular a material having a lower hardness than that of the glass container.

3. Method for cleaning and coating glass containers (10) according to any one of the preceding claims, wherein:
the part of the outer container surface (30) of the glass container (10) being in contact with the material is located at the upper end (15) of the glass container (10), preferably above the container shoulder (16) and for example at the container neck (17) and/or the container collar (18) and/or
the contact provides for holding the glass container (10), preferably at its upper end (15), in particular at its container collar (18) and/or its container neck (17), more preferably such that the glass container (10) is secured by the container collar (18) against a downward movement.

4. Method for cleaning and coating glass containers (10) according to any one of the preceding claims,
wherein before and/or during the first and/or second processing step, the inner container surface (20) of the glass container (10) is contact-free, in particular by sealingly closing the container opening (19) of the glass containers (10) in order to prevent substances from penetrating into the inner volume (11), in particular to prevent penetration of liquids and solids into the inner volume (11), and preferably also to prevent penetration of gases or gaseous compounds into the inner volume (11).

5. Method for cleaning and coating glass containers (10) according to any one of the preceding claims, wherein in addition to the first processing step and the second processing step, the method further comprises a third processing step, preferably a fourth processing step, and possibly further processing steps,
wherein before and/or during the third, fourth and/or further processing steps, the outer container surface (30) of the glass container (10) is contact-free or in contact with a material having a lower hardness than that of the glass container (10) or only in contact with such materials and, preferably, the inner container surface (20) of the glass container (10) is contact-free, in particular by sealingly closing the container opening (19) of the glass containers (10) in order to prevent substances from penetrating into the inner volume (11), and/or
wherein in each processing step the plurality of glass containers (10) is simultaneously processed, preferably in an individual processing station (200, 202, 204, 206), and/or
wherein in each processing step the plurality of glass containers (10) is simultaneously held by a capturing device (100), the capturing device (100) preferably being adapted to simultaneously capture and hold the plurality of glass containers (10).

6. Method for cleaning and coating glass containers (10) according to any one of the preceding claims,
wherein the cleaning of the glass containers (10) comprises ultrasonic cleaning and/or
wherein the coating of glass containers (10) comprises dipping the glass container into a coating material,
wherein the coating of the glass containers (10) preferably comprises dipping the glass containers (10) first with the container bottom (13) into the coating material and then further up to an upper limit, in particular at an upper edge of the glass containers (10), wherein the upper limit is preferably located in the area of the container shoulder (16), more preferably in the transition area from the container shoulder (16) to the cylindrical container body (9) and
wherein the coating of the glass containers (10) preferably comprises removing the glass containers (10) again from the coating material.

7. Method for cleaning and coating glass containers (10) according to any one of the preceding claims, wherein the coating material preferably has one or more of the following properties:
(a) the coating material is a silicone emulsion, preferably with a silicone content between 0.4 and 7 percent by weight of the silicone emulsion or comprises such a silicone emulsion,
(b) the coating material, in particular, the silicone emulsion also includes solvents, preferably propylene glycol,
(c) the coating material, in particular, the silicone emulsion is formed such that it post-cures under the influence of temperature,
(d) the coating material, in particular, the silicone is preferably recommended by the German Federal Institute for Risk Assessment (BfR) for contact with foodstuffs and more preferably is approved as a medical product by the German Federal Office for Drugs and Medical Devices (BfArM),
(e) the coating material comprises a 35% dimethicone emulsion, wherein the coating material preferably also includes water,
(f) the coating material comprises the Dow Corning^{®} 365, 35% Dimethicone NF emulsion and/or the Dow Corning^{®} 366 35% Dimethicone NF emulsion.

8. Method for cleaning and coating glass containers (10) according to any one of the preceding claims,
wherein after coating the glass containers (10), in particular after removing the glass containers (10) from the coating material, the coating is homogenized, for example by removing or smoothing a drop of coating material formed at the container bottom (13), the homogenization preferably being a further processing step in which the glass containers (10) are preferably simultaneously processed, and
wherein before and/or during the homogenization the outer container surface (30) of the glass container (10) preferably is contact-free or in contact with a material having a lower hardness than that of the glass container (10) or only in contact with such materials and, preferably, the inner container surface (20) of the glass container (10) is contact-free, in particular by sealingly closing the container opening (19) of the glass containers (10),
and wherein when homogenizing the coating, the plurality of glass containers (10), in particular their outer container surface (30), in particular the container bottom (13), preferably is dipped into a solvent or advanced to the surface of a solvent or advanced to a smoothing device.

9. Method for cleaning and coating glass containers (10) according to any one of the preceding claims,
further comprising drying the coating material, the drying preferably being a further processing step in which the glass containers (10) are preferably simultaneously processed,
wherein during the drying the outer container surface (30) of the glass container (10) preferably is contact-free or in contact with a material having a lower hardness than that of the glass container (10) or only in contact with such materials and, preferably, the inner container surface (20) of the glass container (10) is contact-free, in particular by sealingly closing the container opening (19) of the glass containers (10) in order to prevent substances from penetrating into the inner volume (11),
wherein the drying of the coating material preferably comprises waiting and/or adding heat and/or wherein the drying preferably is carried out under application of vacuum or microwave radiation.

10. Method for cleaning and coating glass containers (10) according to any one of the preceding claims,
wherein the plurality of glass containers (10) is simultaneously transported between the processing steps, in particular by means of a transport device (300),
wherein the glass containers (10) are preferably transported such that the outer container surface (30) of the glass container (10) is contact-free or in contact with a material having a lower hardness than that of the glass container (10) or only in contact with such materials and, preferably, the inner container surface (20) of the glass container (10) is contact-free, in particular by sealingly closing the container opening (19) of the glass containers (10) in order to prevent substances from penetrating into the inner volume (11),
wherein the transport device (300) preferably is adapted to move the capturing device (100) from one processing station (200, 202, 204, 206) to the next processing station (200, 202, 204, 206) such that the plurality of glass containers (10) held by the capturing device (100) is simultaneously transported from one processing station (200, 202, 204, 206) to the next processing station (200, 202, 204, 206).

11. Method for cleaning and coating glass containers (10) according to any one of the preceding claims,
wherein during the processing steps and/or during the transporting, the plurality of glass containers (10) is held such that each glass container (10) is held individually and contact-free with respect to the other glass containers, in particular by the capturing device (100), and, preferably, the container opening (19) of the glass containers (10) is sealingly closed, in particular by means of the capturing device (100) and/or
wherein the plurality of glass containers (10) is held continuously during the processing steps and, preferably, further held during transport, and wherein preferably the container opening (19) of the glass containers (10) is sealingly closed meanwhile.

12. Capturing device (100) for simultaneously capturing and holding a plurality of glass containers (10) designed as vials for pharmaceutical, medical or cosmetic applications, during a first processing step of cleaning the plurality of glass containers (10) and a second processing step of coating the plurality of glass containers (10), the glass containers (10) comprising a hollow body (12) surrounding an inner volume (11), having a lower end (14) closed by a container bottom (13), a cylindrical container body (9), an upper end (15) with a container shoulder (16), a container neck (17), a container collar (18) and a container opening (19) which extends into the inner volume (11) of the glass container (10), and an inner container surface (20) facing the inner volume (11) and an outer container surface (30) facing away from the inner volume (11), wherein the capturing device (100) comprises:
a plurality of individual holding sockets (140), each adapted to capture and hold one of the glass containers (10) individually and contact-free with respect to the other glass containers (10).

13. Capturing device (100) according to the preceding claim wherein:
(a) the individual holding sockets (140) of the capturing device (100) each comprise a first and a second holding body (142, 144), wherein the two holding bodies (142, 144) are movable relative to each another, and
(b) the capturing device comprises one or more capturing strips (120), each capturing strip (12) comprising a first strip arm (122) and a second strip arm (124), the first strip arm (122) forming the first holding bodies (142) of the holding sockets (140) and the second strip arm (124) forming the second holding bodies (144) of the holding sockets (140), and
(c) the capturing device comprises at least one sealing element (160) which can be brought into sealing contact with the upper end (15) of a glass container (10) held by the capturing device (100), in particular the container collar (18), such that the container opening (19) is sealingly closed, and
(d) the capturing device comprises pressing means (180) adapted to press the upper end (15) of the glass container (10) held by the capturing device (100) and the sealing element (160) against each other to bring the upper end (15) of the glass container (10) into sealing contact with the sealing element (160).

14. Apparatus (1) for cleaning and coating glass containers (10) designed as vials for pharmaceutical, medical or cosmetic applications, the glass containers (10) comprising a hollow body (12) surrounding an inner volume (11), having a lower end (14) closed by a container bottom (13), a cylindrical container body (9), an upper end (15) with a container shoulder (16), a container neck (17), a container collar (18) and a container opening (19) which extends into the inner volume (11) of the glass container (10), and an inner container surface (20) facing the inner volume (11) and an outer container surface (30) facing away from the inner volume (11), wherein the apparatus (1) comprises:
a capturing device (100) adapted to simultaneously capture and hold a plurality of glass containers (10) designed as vials for pharmaceutical, medical or cosmetic applications, said capturing device (100) comprising a plurality of individual holding sockets (140), each adapted to capture and hold one of the glass containers (10) individually and contact-free with respect to the other glass containers (10), in particular according to claim 12 or 13,
at least two processing stations (200, 202, 204, 206), each of which being adapted to simultaneously subject the plurality of glass containers (10) held by the capturing device (100) to a specific processing step, one processing station being designed as a cleaning station (200) for simultaneously cleaning the plurality of glass containers held by the capturing device and one processing station being designed as a coating station (202) for simultaneously coating the plurality of glass containers held by the capturing device, and
a transport device (300) which is adapted to move the capturing device (100) from one processing station (200, 202, 204, 206) to the next processing station (200, 202, 204, 206) such that the plurality of glass containers (10) held by the capturing device (100) is simultaneously transported from one processing station (200, 202, 204, 206) to the next processing station (200, 202, 204, 206).

## Patentansprüche

1. Verfahren zum Reinigen und Beschichten von Glasbehältern (10) in Form von Fläschchen für pharmazeutische, medizinische oder kosmetische Anwendungen, wobei die Glasbehälter (10) einen Hohlkörper (12) umfassen, der ein Innenvolumen (11) umschließt, mit einem unteren Ende (14), das durch einen Behälterboden (13) verschlossen ist, einem zylindrischen Behälterkorpus (9), einem oberen Ende (15) mit einer Behälterschulter (16), einem Behälterhals (17), einem Behälterkragen (18) und einer Behälteröffnung (19), die sich in das Innenvolumen (11) des Glasbehälters (10) hinein erstreckt, und mit einer dem Innenvolumen (11) zugewandten inneren Behälteroberfläche (20) und einer von dem Innenvolumen (11) abgewandten äußeren Behälteroberfläche (30),
wobei eine Mehrzahl von Glasbehältern (10) gleichzeitig einem ersten Bearbeitungsschritt unterzogen wird, bei dem die Mehrzahl von Glasbehältern (10) gleichzeitig gereinigt wird, so dass die außenseitige Oberfläche (30) der Glasbehälter (10) mit einem Reinigungsfluid gereinigt wird, und wobei die Mehrzahl von Glasbehältern (10) danach gleichzeitig einem zweiten Bearbeitungsschritt unterzogen wird, bei dem die Mehrzahl von Glasbehältern (10) gleichzeitig derart beschichtet wird, dass die äußere Behälteroberfläche (30) der Glasbehälter (10) mit einem Beschichtungsmaterial beschichtet wird, und
wobei vor und während des ersten und zweiten Bearbeitungsschritts die äußere Behälteroberfläche (30) des Glasbehälters (10) nicht in Kontakt mit den anderen Glasbehältern (10) kommt und jeder Glasbehälter (10) der Mehrzahl von Glasbehältern (10) einzeln gehalten wird.

2. Verfahren zum Reinigen und Beschichten von Glasbehältern (10) gemäß dem vorhergehenden Anspruch, wobei vor und/oder während des ersten und/oder zweiten Bearbeitungsschritts weniger als 20 Prozent der äußern Behälteroberfläche (30), vorzugsweise weniger als 10 Prozent der äußeren Behälteroberfläche (30), weiter bevorzugt weniger als 5 Prozent der äußeren Behälteroberfläche (30) und besonders bevorzugt weniger als 2 Prozent der äußeren Behälteroberfläche (30) in Kontakt mit einem Material steht, insbesondere mit einem Material, das eine geringere Härte aufweist als der Glasbehälter.

3. Verfahren zum Reinigen und Beschichten von Glasbehältern (10) nach einem der vorhergehenden Ansprüche, wobei:
sich der mit dem Material in Kontakt stehende Bereich der äußeren Behälteroberfläche (30) des Glasbehälters (10) am oberen Ende (15) des Glasbehälters (10) befindet, vorzugsweise oberhalb der Behälterschulter (16) und beispielsweise an dem Behälterhals (17) und/oder an dem Behälterkragen (18), und/oder
der Kontakt für ein Halten des Glasbehälters (10) sorgt, vorzugsweise an dessen oberem Ende (15), insbesondere an dessen Behälterkragen (18) und/oder an dessen Behälterhals (17), besonders bevorzugt in solcher Weise, dass der Glasbehälter (10) durch den Behälterkragen (18) gegen eine Bewegung nach unten gesichert ist.

4. Verfahren zum Reinigen und Beschichten von Glasbehältern (10) nach einem der vorhergehenden Ansprüche,
wobei vor und/oder während des ersten und/oder zweiten Bearbeitungsschritts die innere Behälteroberfläche (20) des Glasbehälters (10) berührungsfrei bleibt, insbesondere durch dichtes Verschließen der Behälteröffnung (19) der Glasbehälter (10), um ein Eindringen von Stoffen in das Innenvolumen (11) zu verhindern, insbesondere um ein Eindringen von Flüssigkeiten und Feststoffen in das Innenvolumen (11) zu verhindern, und vorzugsweise auch, um ein Eindringen von Gasen oder gasförmigen Verbindungen in das Innenvolumen (11) zu verhindern.

5. Verfahren zum Reinigen und Beschichten von Glasbehältern (10) nach einem der vorhergehenden Ansprüche, wobei das Verfahren zusätzlich zu dem ersten Bearbeitungsschritt und dem zweiten Bearbeitungsschritt ferner einen dritten Bearbeitungsschritt, vorzugsweise einen vierten Bearbeitungsschritt und gegebenenfalls weitere Bearbeitungsschritte umfasst,
wobei vor und/oder während des dritten, vierten und/oder weiteren Bearbeitungsschritts die äußere Behälteroberfläche (30) des Glasbehälters (10) berührungsfrei bleibt oder in Kontakt mit einem Material kommt, das eine geringere Härte als der Glasbehälter (10) aufweist, oder nur in Kontakt mit solchen Materialien kommt, und wobei vorzugsweise die innere Behälteroberfläche (20) des Glasbehälters (10) berührungsfrei bleibt, insbesondere indem die Behälteröffnung (19) des Glasbehälters (10) dicht verschlossen wird, um ein Eindringen von Stoffen in das Innenvolumen (11) zu verhindern, und/oder
wobei die Mehrzahl von Glasbehältern (10) in jedem Bearbeitungsschritt gleichzeitig bearbeitet wird, vorzugsweise an einer jeweils einzelnen Bearbeitungsstation (200, 202, 204, 206), und/oder
wobei die Mehrzahl von Glasbehältern (10) in jedem Bearbeitungsschritt gleichzeitig von einer Aufnahmevorrichtung (100) gehalten wird, wobei die Aufnahmevorrichtung (100) vorzugsweise dazu ausgebildet ist, die Mehrzahl von Glasbehältern (10) gleichzeitig aufzunehmen und zu halten.

6. Verfahren zum Reinigen und Beschichten von Glasbehältern (10) nach einem der vorhergehenden Ansprüche,
wobei das Reinigen der Glasbehälter (10) eine Ultraschallreinigung umfasst und/oder
wobei das Beschichten von Glasbehältern (10) ein Eintauchen der Glasbehälter in ein Beschichtungsmaterial umfasst,
wobei das Beschichten der Glasbehälter (10) vorzugsweise das Eintauchen der Glasbehälter (10) in das Beschichtungsmaterial mit dem Behälterboden (13) voran und dann weiter bis zu einer Obergrenze umfasst, insbesondere bis zu einem oberen Rand der Glasbehälter (10), wobei die Obergrenze vorzugsweise im Bereich der Behälterschulter (16) liegt, besonders bevorzugt im Übergangsbereich von der Behälterschulter (16) in den zylindrischen Behälterkorpus (9), und
wobei das Beschichten der Glasbehälter (10) vorzugsweise umfasst, die Glasbehälter (10) wieder aus dem Beschichtungsmaterial zu entfernen.

7. Verfahren zum Reinigen und Beschichten von Glasbehältern (10) nach einem der vorhergehenden Ansprüche, wobei das Beschichtungsmaterial vorzugsweise eine oder mehrere der folgenden Eigenschaften aufweist:
(a) das Beschichtungsmaterial ist eine Silikonemulsion, vorzugsweise mit einem Silikongehalt der Silikonemulsion zwischen 0,4 und 7 Gewichtsprozent, oder umfasst eine solche Silikonemulsion,
(b) das Beschichtungsmaterial, insbesondere die Silikonemulsion, enthält außerdem Lösungsmittel, vorzugsweise Propylenglykol,
(c) das Beschichtungsmaterial, insbesondere die Silikonemulsion, ist derart ausgebildet, dass sie unter Temperatureinfluss nachhärtet,
(d) das Beschichtungsmaterial, insbesondere das Silikon, ist vorzugsweise vom Bundesinstitut für Risikobewertung (BfR) für den Kontakt mit Lebensmitteln empfohlen und besonders bevorzugt vom Bundesamt für Arzneimittel und Medizinprodukte (BfArM) als Medizinprodukt zugelassen,
(e) das Beschichtungsmaterial umfasst eine 35 %ige Dimethicon-Emulsion, wobei das Beschichtungsmaterial vorzugsweise außerdem Wasser enthält,
(f) das Beschichtungsmaterial umfasst die 35 %ige Dimethicon-NF-Emulsion Dow Corning^{®}365 und/oder die 35 %ige Dimethicon-NF-Emulsion Dow Corning^{®} 366.

8. Verfahren zum Reinigen und Beschichten von Glasbehältern (10) nach einem der vorhergehenden Ansprüche,
wobei nach dem Beschichten der Glasbehälter (10), insbesondere nach dem Entfernen der Glasbehälter (10) aus dem Beschichtungsmaterial, die Beschichtung homogenisiert wird, beispielsweise durch Entfernen oder Glätten eines Tropfens aus Beschichtungsmaterial, der sich am Behälterboden (13) gebildet hat, wobei das Homogenisieren vorzugsweise einen weiteren Bearbeitungsschritt darstellt, bei dem die Glasbehälter (10) vorzugsweise gleichzeitig bearbeitet werden, und
wobei vor und/oder während des Homogenisierens die äußere Behälteroberfläche (30) des Glasbehälters (10) vorzugsweise berührungsfrei bleibt oder in Kontakt mit einem Material geringerer Härte als der des Glasbehälters (10) steht oder nur in Kontakt mit solchen Materialien steht, und wobei die innere Behälteroberfläche (20) des Glasbehälters (10) vorzugsweise berührungsfrei bleibt, insbesondere indem die Behälteröffnung (19) der Glasbehälter (10) dicht verschlossen wird,
und wobei beim Homogenisieren der Beschichtung die Mehrzahl von Glasbehältern (10), insbesondere deren äußere Behälteroberfläche (30), insbesondere der Behälterboden (13), vorzugsweise in ein Lösungsmittel eingetaucht wird oder an die Oberfläche eines Lösungsmittels herangeführt wird oder an eine Glättungseinrichtung herangeführt wird.

9. Verfahren zum Reinigen und Beschichten von Glasbehältern (10) nach einem der vorhergehenden Ansprüche,
ferner umfassend das Trocknen des Beschichtungsmaterials, wobei das Trocknen vorzugsweise einen weiteren Bearbeitungsschritt darstellt, bei dem die Glasbehälter (10) vorzugsweise gleichzeitig bearbeitet werden,
wobei während des Trocknens die äußere Behälteroberfläche (30) des Glasbehälters (10) vorzugsweise berührungsfrei bleibt oder in Kontakt mit einem Material geringerer Härte als der des Glasbehälters (10) steht oder nur in Kontakt mit solchen Materialien steht, und wobei die innere Behälteroberfläche (20) des Glasbehälters (10) berührungsfrei bleibt, insbesondere indem die Behälteröffnung (19) der Glasbehälter (10) dicht verschlossen wird, um ein Eindringen von Substanzen in das Innenvolumen (11) zu verhindern,
wobei das Trocknen des Beschichtungsmaterials vorzugsweise ein Abwarten und/oder Zuführen von Wärme umfasst, und/oder wobei das Trocknen vorzugsweise unter Anwendung von Unterdruck oder Mikrowellenstrahlung erfolgt.

10. Verfahren zum Reinigen und Beschichten von Glasbehältern (10) nach einem der vorhergehenden Ansprüche,
wobei die Mehrzahl von Glasbehälter (10) zwischen den Bearbeitungsschritten gleichzeitig transportiert wird, insbesondere mittels einer Transporteinrichtung (300),
wobei die Glasbehälter (10) vorzugsweise so transportiert werden, dass die äußere Behälteroberfläche (30) der Glasbehälter (10) berührungsfrei bleibt oder in Kontakt mit einem Material geringerer Härte als der des Glasbehälters (10) steht oder nur mit solchen Materialien in Kontakt steht, und wobei vorzugsweise die innere Behälteroberfläche (20) des Glasbehälters (10) berührungsfrei bleibt, insbesondere indem die Behälteröffnung (19) der Glasbehälter (10) dicht verschlossen wird, um das Eindringen von Stoffen in das Innenvolumen (11) zu verhindern,
wobei die Transporteinrichtung (300) vorzugsweise dazu angepasst ist, die Aufnahmevorrichtung (100) von einer Bearbeitungsstation (200, 202, 204, 206) zu der nächsten Bearbeitungsstation (200, 202, 204, 206) zu bewegen, so dass die von der Aufnahmevorrichtung (100) gehaltene Mehrzahl von Glasbehältern (10) gleichzeitig von einer Bearbeitungsstation (200, 202, 204, 206) zu der nächsten Bearbeitungsstation (200, 202, 204, 206) transportiert wird.

11. Verfahren zum Reinigen und Beschichten von Glasbehältern (10) nach einem der vorhergehenden Ansprüche,
wobei während der Bearbeitungsschritte und/oder während des Transports die Mehrzahl von Glasbehältern (10) so gehalten wird, dass jeder Glasbehälter (10) einzeln und ohne Berührung mit anderen Glasbehältern gehalten wird, insbesondere durch die Aufnahmevorrichtung (100), und wobei vorzugsweise die Behälteröffnung (19) der Glasbehälter (10) dicht verschlossen wird, insbesondere durch die Aufnahmevorrichtung (100), und/oder
wobei die Mehrzahl von Glasbehältern (10) während der Bearbeitungsschritte kontinuierlich gehalten wird und vorzugsweise während des Transports weiterhin gehalten wird, und wobei vorzugsweise die Behälteröffnung (19) der Glasbehälter (10) währenddessen dicht verschlossen ist.

12. Aufnahmevorrichtung (100) zum gleichzeitigen Aufnehmen und Halten einer Mehrzahl von Glasbehältern (10) in Form von Fläschchen für pharmazeutische, medizinische oder kosmetische Anwendungen während eines ersten Bearbeitungsschritts des Reinigens der Mehrzahl von Glasbehältern (10) und eines zweiten Bearbeitungsschritts des Beschichtens der Mehrzahl von Glasbehältern (10), wobei die Glasbehälter (10) einen Hohlkörper (12) umfassen, der ein Innenvolumen (11) umschließt, mit einem unteren Ende (14), das durch einen Behälterboden (13) verschlossen ist, einem zylindrischen Behälterkorpus (9), einem oberen Ende (15) mit einer Behälterschulter (16), einem Behälterhals (17), einem Behälterkragen (18) und einer Behälteröffnung (19), die sich in das Innenvolumen (11) des Glasbehälters (10) hinein erstreckt, und mit einer dem Innenvolumen (11) zugewandten inneren Behälteroberfläche (20) und einer von dem Innenvolumen (11) abgewandten äußeren Behälteroberfläche (30), wobei die Aufnahmevorrichtung (100) umfasst:
eine Mehrzahl von einzelnen Halteaufnahmen (140), die jeweils dazu angepasst sind, einen der Glasbehälter (10) einzeln aufzunehmen und zu halten, ohne dass die anderen Glasbehälter (10) berührt werden.

13. Aufnahmevorrichtung (100) nach dem vorhergehenden Anspruch, wobei:
(a) die einzelnen Halteaufnahmen (140) der Aufnahmevorrichtung (100) jeweils einen ersten und einen zweiten Haltekörper (142, 144) umfassen, wobei die beiden Haltekörper (142, 144) relativ zueinander bewegbar sind, und
(b) die Aufnahmevorrichtung eine Aufnahmeleiste oder eine Mehrzahl von Aufnahmeleisten (120) umfasst, wobei jede Aufnahmeleiste (12) einen ersten Leistenarm (122) und einen zweiten Leistenarm (124) umfasst, wobei der erste Leistenarm (122) die ersten Haltekörper (142) der Halteaufnahmen (140) und der zweite Leistenarm (124) die zweiten Haltekörper (144) der Halteaufnahmen (140) bildet, und
(c) die Aufnahmevorrichtung mindestens ein Abdichtelement (160) umfasst, das mit dem oberen Ende (15) eines von der Aufnahmevorrichtung (100) gehaltenen Glasbehälters (10), insbesondere mit dem Behälterkragen (18), so in abdichtenden Kontakt gebracht werden kann, dass die Behälteröffnung (19) dicht verschlossen wird, und
(d) die Aufnahmevorrichtung eine Anpresseinrichtung (180) umfasst, die dazu ausgebildet sind, das obere Ende (15) des von der Aufnahmevorrichtung (100) gehaltenen Glasbehälters (10) und das Abdichtelement (160) gegeneinander zu drücken, um das obere Ende (15) des Glasbehälters (10) in abdichtenden Kontakt mit dem Abdichtelement (160) zu bringen.

14. Vorrichtung (1) zum Reinigen und Beschichten von Glasbehältern (10) in Form von Fläschchen für pharmazeutische, medizinische oder kosmetische Anwendungen, wobei die Glasbehälter (10) einen Hohlkörper (12) umfassen, der ein Innenvolumen (11) umschließt, mit einem unteren Ende (14), das durch einen Behälterboden (13) verschlossen ist, einem zylindrischen Behälterkorpus (9), einem oberen Ende (15) mit einer Behälterschulter (16), einem Behälterhals (17), einem Behälterkragen (18) und einer Behälteröffnung (19), die sich in das Innenvolumen (11) des Glasbehälters (10) hinein erstreckt, und mit einer dem Innenvolumen (11) zugewandten inneren Behälteroberfläche (20) und einer von dem Innenvolumen (11) abgewandten äußeren Behälteroberfläche (30), wobei die Vorrichtung (1) umfasst:
eine Aufnahmevorrichtung (100), die zum gleichzeitigen Aufnehmen und Halten einer Mehrzahl von Glasbehältern (10) in Form von Fläschchen für pharmazeutische, medizinische oder kosmetische Anwendungen ausgebildet ist, wobei die Aufnahmevorrichtung (100) eine Mehrzahl von einzelnen Halteaufnahmen (140) umfasst, die jeweils dazu ausgebildet sind, einen der Glasbehälter (10) einzeln aufzunehmen und zu halten, ohne dass die anderen Glasbehälter (10) berührt werden, insbesondere nach Anspruch 12 oder 13,
mindestens zwei Bearbeitungsstationen (200, 202, 204, 206), die jeweils dazu eingerichtet sind, die von der Aufnahmevorrichtung (100) gehaltene Mehrzahl von Glasbehältern (10) gleichzeitig einem bestimmten Bearbeitungsschritt zu unterziehen, wobei eine Bearbeitungsstation als eine Reinigungsstation (200) ausgebildet ist, zum gleichzeitigen Reinigen der von der Aufnahmevorrichtung (100) gehaltenen Mehrzahl von Glasbehältern, und eine Bearbeitungsstation als eine Beschichtungsstation (202) ausgebildet ist, zum gleichzeitigen Beschichten der von der Aufnahmevorrichtung gehaltenen Mehrzahl von Glasbehältern, und
eine Transporteinrichtung (300), die dazu ausgebildet ist, die Aufnahmevorrichtung (100) von einer Bearbeitungsstation (200, 202, 204, 206) zu der nächsten Bearbeitungsstation (200, 202, 204, 206) zu bewegen, so dass die von der Aufnahmevorrichtung (100) gehaltene Mehrzahl von Glasbehältern (10) gleichzeitig von einer Bearbeitungsstation (200, 202, 204, 206) zu der nächsten Bearbeitungsstation (200, 202, 204, 206) transportiert wird.

## Revendications

1. Procédé de nettoyage et de revêtement de récipients en verre (10) conçus comme des flacons pour des applications pharmaceutiques, médicales ou cosmétiques, les récipients en verre (10) comprenant un corps creux (12) entourant un volume intérieur (11), ayant une extrémité inférieure (14) fermée par un fond de récipient (13), un corps de récipient cylindrique (9), une extrémité supérieure (15) avec un épaulement de récipient (16), un goulot de récipient (17), un col de récipient (18) et une ouverture de récipient (19) qui s'étend dans le volume intérieur (11) du récipient en verre (10), et une surface de récipient intérieure (20) faisant face au volume intérieur (11) et une surface de récipient extérieure (30) dans la direction opposée au volume intérieur (11),
dans lequel une pluralité de récipients en verre (10) est simultanément soumise à une première étape de traitement dans laquelle la pluralité de récipients en verre (10) est simultanément nettoyée, de telle manière que la surface extérieure (30) des récipients en verre (10) est nettoyée avec un fluide de nettoyage et ensuite la pluralité de récipients en verre (10) est simultanément soumise à une seconde étape de traitement dans laquelle la pluralité de récipients en verre (10) est simultanément revêtue de telle manière que la surface de récipient extérieure (30) des récipients en verre (10) est revêtue avec un matériau de revêtement, et
dans lequel avant et pendant la première et la seconde étape de traitement la surface de récipient extérieure (30) du récipient en verre (10) est sans contact avec les autres récipients en verre (10) et chaque récipient en verre (10) de la pluralité de récipients en verre (10) est maintenu individuellement.

2. Procédé de nettoyage et de revêtement de récipients en verre (10) selon la revendication précédente, dans lequel avant et/ou pendant la première et/ou la seconde étape de traitement moins de 20 pour cent de la surface de récipient extérieure (30), de préférence moins de 10 pour cent de la surface de récipient extérieure (30), plus préférablement moins de 5 pour cent de la surface de récipient extérieure (30), et le plus préférablement moins de 2 pour cent de la surface de récipient extérieure (30) est en contact avec un matériau, en particulier un matériau ayant une dureté inférieure à celle du récipient en verre.

3. Procédé de nettoyage et de revêtement de récipients en verre (10) selon l'une quelconque des revendications précédentes, dans lequel :
la partie de la surface de récipient extérieure (30) du récipient en verre (10) étant en contact avec le matériau est située à l'extrémité supérieure (15) du récipient en verre (10), de préférence au-dessus de l'épaulement de récipient (16) et par exemple au niveau du goulot de récipient (17) et/ou du col de récipient (18) et/ou
le contact permet le maintien du récipient en verre (10), de préférence à son extrémité supérieure (15), en particulier au niveau de son col de récipient (18) et/ou de son goulot de récipient (17), plus préférablement de telle manière que le récipient en verre (10) est empêché de se mouvoir vers l'arrière par le col de récipient (18).

4. Procédé de nettoyage et de revêtement de récipients en verre (10) selon l'une quelconque des revendications précédentes,
dans lequel avant et/ou pendant la première et/ou la seconde étape de traitement, la surface de récipient intérieure (20) est sans contact, en particulier en fermant de manière étanche l'ouverture de récipient (19) des récipients en verre (10) afin d'empêcher des substances de pénétrer dans le volume intérieur (11), en particulier pour empêcher la pénétration de liquides et de solides dans le volume intérieur (11), et de préférence aussi pour empêcher la pénétrations de gaz ou de composés gazeux dans le volume intérieur (11).

5. Procédé de nettoyage et de revêtement de récipients en verre (10) selon l'une quelconque des revendications précédentes, dans lequel en plus de la première étape de traitement et de la seconde étape de traitement, le procédé comprend en outre une troisième étape de traitement, de préférence une quatrième étape de traitement, et possiblement d'autres étapes de traitement,
dans lequel avant et/ou pendant les troisième, quatrième et/ou autres étapes de traitement, la surface de récipient extérieure (30) du récipient en verre (10) est sans contact ou en contact avec un matériau ayant une dureté inférieure à celle du récipient en verre (10) ou seulement en contact avec de tels matériaux et, de préférence, la surface de récipient intérieure (20) du récipient en verre (10) est sans contact, en particulier en fermant hermétiquement l'ouverture de récipient (19) des récipients en verre (10) afin d'empêcher des substances de pénétrer dans le volume intérieur (11), et/ou
dans lequel dans chaque étape de traitement la pluralité de récipients en verre (10) est traitée simultanément, de préférence dans une station de traitement individuelle (200, 202, 204, 206), et/ou
dans lequel dans chaque étape de traitement la pluralité de récipients en verre (10) est simultanément maintenue par un dispositif de saisie (100), le dispositif de saisie (100) étant de préférence adapté pour saisir et maintenir simultanément la pluralité de récipients en verre (10).

6. Procédé de nettoyage et de revêtement de récipients en verre (10) selon l'une quelconque des revendications précédentes,
dans lequel le nettoyage des récipients en verre (10) comprend un nettoyage par ultrasons et/ou
dans lequel le revêtement des récipients en verre (10) comprend de tremper le récipient en verre dans un matériau de revêtement,
dans lequel le revêtement des récipients en verre (10) comprend de préférence de tremper les récipients en verre (10) d'abord avec le fond de récipient (13) dans le matériau de revêtement et ensuite plus vers le haut jusqu'à une limite supérieure, en particulier au niveau d'un bord supérieur des récipients en verre (10), dans lequel la limite supérieure est de préférence située dans la zone de l'épaulement de récipient (16), plus préférablement dans la zone de transition de l'épaulement de récipient (16) vers le corps de récipient cylindrique (9) et
dans lequel le revêtement des récipients en verre (10) comprend de préférence d'enlever les récipients en verre (10) à nouveau du matériau de revêtement.

7. Procédé de nettoyage et de revêtement de récipients en verre (10) selon l'une quelconque des revendications précédentes, dans lequel le matériau de revêtement a de préférence une ou plusieurs des propriétés suivantes :
(a) le matériau de revêtement est une émulsion de silicone, de préférence avec un contenu en silicone d'entre 0,4 et 0,7 pour cent en poids de l'émulsion de silicone ou comprend une telle émulsion de silicone,
(b) le matériau de revêtement, en particulier, l'émulsion de silicone inclut aussi des solvants, de préférence du propylène glycol,
(c) le matériau de revêtement, en particulier, l'émulsion de silicone est formé de telle manière qu'il durcit ensuite sous l'influence de la température,
(d) le matériau de revêtement, en particulier, l'émulsion de silicone, est de préférence recommandé par l'institut fédéral allemand d'évaluation des risques (BfR) pour le contact avec des aliments et plus préférablement est approuvé comme produit médical par le bureau fédéral allemand des médicaments et des dispositifs médicaux (BfRrM),
(e) le matériau de revêtement comprend une émulsion à 35% de diméthicone, dans lequel le matériau de revêtement inclut aussi de préférence de l'eau,
(f) le matériau de revêtement comprend l'émulsion NF de diméthicone Dow Corning^{®} 365 à 35% et/ou l'émulsion NF de diméthicone Dow Corning^{®} 366 à 35%.

8. Procédé de nettoyage et de revêtement de récipients en verre (10) selon l'une quelconque des revendications précédentes,
dans lequel après le revêtement des récipients en verre (10), en particulier après l'enlèvement des récipients en verre (10) du matériau de revêtement, le revêtement est homogénéisé, par exemple en enlevant ou lissant une goutte de matériau de revêtement formée au niveau du fond de récipient (13), l'homogénéisation étant de préférence une étape de traitement supplémentaire dans laquelle les récipients en verre (10) sont de préférence traités simultanément, et
dans lequel avant et/ou pendant l'homogénéisation la surface de récipient extérieure (30) du récipient en verre (10) est de préférence sans contact ou en contact avec un matériau ayant une dureté inférieure à celle du récipient en verre (10) ou seulement en contact avec de tels matériaux et, de préférence, la surface de récipient intérieure (20) du récipient en verre (10) est sans contact, en particulier par la fermeture hermétique de l'ouverture de récipient (19) des récipients en verre (10),
et dans lequel lors de l'homogénéisation du revêtement, la pluralité de récipients en verre (10), en particulier leur surface de récipient extérieure (30), en particulier le fond de récipient (13), est de préférence trempée dans un solvant ou avancée sur la surface d'un solvant ou avancée sur un dispositif de lissage.

9. Procédé de nettoyage et de revêtement de récipients en verre (10) selon l'une quelconque des revendications précédentes,
comprenant en outre de sécher le matériau de revêtement, le séchage étant de préférence une autre étape de traitement dans laquelle les récipients en verre (10) sont de préférence traités simultanément,
dans lequel pendant le séchage la surface de récipient extérieure (30) du récipient en verre (10) est de préférence sans contact ou en contact avec un matériau ayant une dureté inférieure à celle du récipient en verre (10) ou seulement en contact avec de tels matériaux et, de préférence, la surface de récipient intérieure (20) du récipient en verre (10) est sans contact, en particulier par fermeture hermétique de l'ouverture de récipient (19) des récipients en verre (10) afin d'empêcher des substances de pénétrer dans le volume intérieur (11),
dans lequel le séchage du matériau de revêtement comprend de préférence d'attendre et/ou d'ajouter de la chaleur et/ou dans lequel le séchage est réalisé de préférence sous application de vide ou de rayonnement microonde.

10. Procédé de nettoyage et de revêtement de récipients en verre (10) selon l'une quelconque des revendications précédentes,
dans lequel la pluralité de récipients en verre (10) est transportée simultanément entre les étapes de traitement, en particulier au moyen d'un dispositif de transport (300),
dans lequel les récipients en verre (10) sont transportés de préférence de telle manière que la surface de récipient extérieure (30) du récipient en verre (10) est sans contact ou en contact avec un matériau ayant une dureté inférieure à celle du récipient en verre (10) ou seulement en contact avec de tels matériaux et, de préférence, la surface de récipient intérieure (20) du récipient en verre (10) est sans contact, en particulier par la fermeture hermétique de l'ouverture de récipient (19) des récipients en verre (10) afin d'empêcher des substances de pénétrer dans le volume intérieur (11),
dans lequel le dispositif de transport (300) est adapté de préférence pour déplacer le dispositif de saisie (100) d'une station de traitement (200, 202, 204, 206) vers la prochaine station de traitement (200, 202, 204, 206) de telle manière que la pluralité de récipients en verre (10) maintenue par le dispositif de saisie (100) est transportée simultanément d'une station de traitement (200, 202, 204, 206) vers la prochaine station de traitement (200, 202, 204, 206).

11. Procédé de nettoyage et de revêtement de récipients en verre (10) selon l'une quelconque des revendications précédentes,
dans lequel pendant les étapes de traitement et/ou pendant le transport, la pluralité de récipients en verre (10) est maintenue de telle manière que chaque récipient en verre (10) est maintenu individuellement et sans contact avec les autres récipients en verre, en particulier par le dispositif de saisie (100), et, de préférence, l'ouverture de récipient (19) des récipients en verre (10) est fermée hermétiquement, en particulier au moyen du dispositif de saisie (100) et/ou
dans lequel la pluralité de récipients en verre (10) est maintenue continûment pendant les étapes de traitement et, de préférence, maintenue encore pendant le transport, et dans lequel de préférence l'ouverture de récipient (19) des récipients en verre (10) est fermée hermétiquement dans le même temps.

12. Dispositif de saisie (100) pour saisir et maintenir simultanément une pluralité de récipients en verre (10) conçus comme des flacons pour des applications pharmaceutiques, médicales ou cosmétiques, pendant une première étape de traitement de nettoyage de la pluralité de récipients en verre (10) et une seconde étape de traitement de revêtement de la pluralité de récipients en verre (10), les récipients en verre (10) comprenant un corps creux (12) entourant un volume intérieur (11), ayant une extrémité inférieure (14) fermée par un fond de récipient (13), un corps de récipient cylindrique (9), une extrémité supérieure (15) avec un épaulement de récipient (16), un goulot de récipient (17), un col de récipient (18) et une ouverture de récipient (19) qui s'étend dans le volume intérieur (11) du récipient en verre (10), et une surface de récipient intérieure (20) faisant face au volume intérieur (11) et une surface de récipient extérieure (30) dans la direction opposée au volume intérieur (11), dans lequel le dispositif de saisie (100) comprend :
une pluralité d'encoches (140) individuelles, chacune adaptée pour saisir et maintenir un des récipients en verre (10) individuellement et sans contact avec les autres récipients en verre (10).

13. Dispositif de saisie (100) selon la revendication précédente dans lequel :
(a) les encoches de maintien (140) individuelles du dispositif de saisie (100) comprennent chacune un premier et un second corps de maintien (142, 144), dans lequel les deux corps de maintien (142, 144) sont mobiles l'un par rapport à l'autre, et
(b) le dispositif de saisie comprend une ou plusieurs brides de saisie (120), chaque bride de saisie (12) comprenant un premier bras de bride (122), et un second bras de bride (124), le premier bras de bride (122) formant les premiers corps de maintien (142) des encoches de maintien (140) et le second bras de bride (124) formant les second corps de maintien (144) des encoches de maintien (140), et
(c) le dispositif de saisie comprend au moins un élément de fermeture hermétique (160) qui peut être amené en contact hermétique avec l'extrémité supérieure (15) d'un récipient en verre (10) maintenu par le dispositif de saisie (100), en particulier le col de récipient (18), de telle manière que l'ouverture de récipient (19) est fermée hermétiquement, et
(d) le dispositif de saisie comprend des moyens de pression (180) adaptés pour presser l'extrémité supérieure (15) du récipient en verre (10) maintenu par le dispositif de saisie (100) et l'élément de fermeture hermétique (160) l'un contre l'autre pour amener l'extrémité supérieure (15) du récipient en verre (10) en contact hermétique avec l'élément de fermeture hermétique (160).

14. Dispositif (1) pour nettoyer et revêtir des récipients en verre (10) conçus comme des flacons pour des applications pharmaceutiques, médicales ou cosmétiques, les récipients en verre (10) comprenant un corps creux (12) entourant un volume intérieur (11), ayant une extrémité inférieure (14) fermée par un fond de récipient (13), un corps de récipient cylindrique (9), une extrémité supérieure (15) avec un épaulement de récipient (16), un goulot de récipient (17), un col de récipient (18) et une ouverture de récipient (19) qui s'étend dans le volume intérieur (11) du récipient en verre (10), et une surface de récipient intérieure (20) faisant face au volume intérieur (11) et une surface de récipient extérieure (30) dans la direction opposée au volume intérieur (11), dans lequel le dispositif (1) comprend :
un dispositif de saisie (100) adapté pour saisir et maintenir simultanément une pluralité de récipients en verre (10) conçus comme des flacons pour des applications pharmaceutiques, médicales ou cosmétiques, ledit dispositif de saisie (100) comprenant une pluralité d'encoches de maintien (140) individuelles, chacune adaptée pour saisir et maintenir un des récipients en verre (10) individuellement et sans contact avec les autres récipients en verre (10), en particulier selon la revendication 12 ou 13,
au moins deux stations de traitement (200, 202, 204, 206), chacune étant adaptée pour soumettre simultanément la pluralité de récipients en verre (10) maintenue par le dispositif de saisie (100) à une étape de traitement spécifique, une station de traitement étant conçue comme une station de nettoyage (200) pour nettoyer simultanément la pluralité de récipients en verre maintenue par le dispositif de saisie et une station de traitement étant conçue comme une station de revêtement (202) pour revêtir simultanément la pluralité de récipients en verre maintenue par le dispositif de saisie, et
un dispositif de transport (300) qui est adapté pour déplacer le dispositif de saisie (100) d'une station de traitement (200, 202, 204, 206) vers la prochaine station de traitement (200, 202, 204, 206) de telle manière que la pluralité de récipients en verre (10) maintenue par le dispositif de saisie (100) est transportée simultanément d'une station de traitement (200, 202, 204, 206) vers la prochaine station de traitement (200, 202, 204, 206).
